(19) Europäisches Patentamt
European Patent Office
Office européen des brevets

(11) **EP 2 697 600 B1**

(12) **EUROPÄISCHE PATENTSCHRIFT**

(45) Veröffentlichungstag und Bekanntmachung des Hinweises auf die Patenterteilung:
**01.11.2017 Patentblatt 2017/44**

(51) Int Cl.:
**G01B 5/06** (2006.01)　　**G01B 7/06** (2006.01)
**G01B 21/08** (2006.01)　　**G01B 11/06** (2006.01)

(21) Anmeldenummer: **12721161.3**

(22) Anmeldetag: **27.03.2012**

(86) Internationale Anmeldenummer:
**PCT/DE2012/200018**

(87) Internationale Veröffentlichungsnummer:
**WO 2012/139571 (18.10.2012 Gazette 2012/42)**

(54) **VORRICHTUNG UND VERFAHREN ZUR DICKENMESSUNG EINES MESSOBJEKTS**

APPARATUS AND METHOD FOR MEASURING THE THICKNESS OF A MEASUREMENT OBJECT

DISPOSITIF ET PROCÉDÉ POUR MESURER L'ÉPAISSEUR D'UN OBJET À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2011 DE 102011017297**
　　　　　　　**15.07.2011 DE 102011107771**

(43) Veröffentlichungstag der Anmeldung:
**19.02.2014 Patentblatt 2014/08**

(73) Patentinhaber: **Micro-Epsilon Messtechnik GmbH & Co. KG**
**94496 Ortenburg (DE)**

(72) Erfinder:
• **SONNTAG, Achim**
**94113 Tiefenbach (DE)**
• **KIRSCHNER, Gerhard**
**94036 Passau (DE)**
• **FUELLMEIER, Herbert**
**84385 Egglham (DE)**
• **HOCHWIMMER, Franz**
**84385 Egglham (DE)**

(74) Vertreter: **Patent- und Rechtsanwälte Ullrich & Naumann**
**PartG mbB**
**Schneidmühlstrasse 21**
**69115 Heidelberg (DE)**

(56) Entgegenhaltungen:
WO-A1-2011/000665　　DE-A1- 4 407 215
US-A- 3 536 405　　　　US-A1- 2006 132 808
US-A1- 2009 056 412

**Beschreibung**

Die Erfindung betrifft eine Vorrichtung zur Dickenmessung eines vorzugsweise bahnförmigen oder stückgutförmigen Messobjekts in einem Messspalt mit einer an einem Maschinenrahmen angebrachten Messmechanik, wobei die Messmechanik zur Dickenmessung einen oder mehrere auf das Messobjekt gerichtete Wegmesssensoren umfasst.

Des Weiteren betrifft die Erfindung ein Verfahren zur Dickenmessung eines vorzugsweise bahnförmigen oder stückgutförmigen Messobjekts in einem Messspalt, wobei eine Messmechanik an einem Maschinenrahmen angebracht wird, und wobei durch die Messmechanik ein oder mehrere Wegmesssensoren zur Dickenmessung auf das Messobjekt gerichtet werden.

Vorrichtungen und Verfahren der gattungsbildenden Art sind seit Jahren in den unterschiedlichsten Ausführungsformen aus der Praxis bekannt. Bei den bekannten Vorrichtungen und Verfahren erfolgt eine kontinuierliche Dickenmessung beispielsweise von Bandmaterial mittels einer C- oder O-rahmenförmigen Messmechanik unter Verwendung von berührungslosen Messmethoden. Zur Dickenmessung werden hierbei optische Sensoren (Triangulation, konfokale Messtechnik), Wirbelstromsensoren, kapazitive Sensoren, Ultraschall-Sensoren, radiometrische Sensoren (Betastrahler) etc. eingesetzt. Üblicherweise erfolgt die Dickenmessung mit zwei Wegmesssensoren von beiden Seiten gegen die Materialoberfläche eines Messobjekts. Die Differenzbildung der beiden Messwertsignale ergibt bei bekanntem Abstand der beiden Wegmesssensoren zueinander die Dicke des gemessenen Materials. Bei Bandmaterial als Messobjekt werden traversierende Messmethoden angewandt, wobei beide Wegmesssensoren paarweise quer zur Transportrichtung des Bandmaterials bewegt werden.

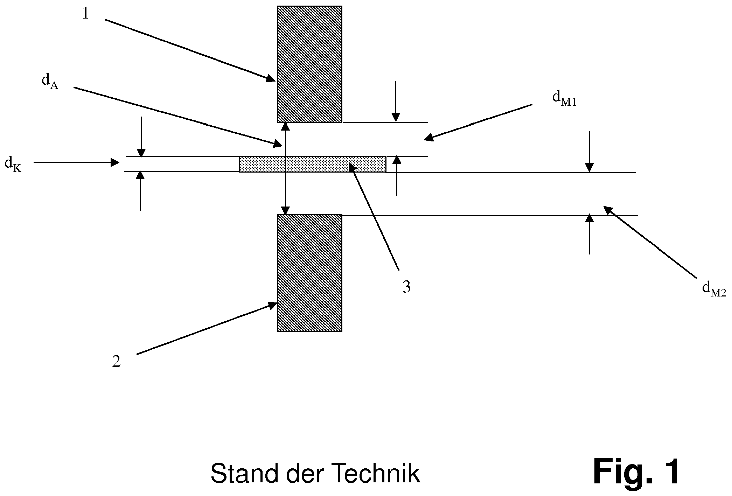

Fig. 1 zeigt in einer schematischen Darstellung das Grundprinzip der differentiellen Dickenmessung bzw. -Kalibrierung mit zwei Wegmesssensoren anhand einer Sensor- und Kalibrationsanordnung. Die Dicke d eines Messobjekts wird mit Hilfe von zwei Wegmesssensoren 1 und 2 als Dickensensoren dadurch bestimmt, dass der Abstand der beiden Wegmesssensoren 1 und 2 zueinander - Messspalt $d_A$ - mit einem Kalibrationsteil 3 mit vordefinierter Dicke $d_K$ (Kalibrationsteildicke) gemäß

$$d_A = d_{M1} + d_{M2} + d_K$$

erfasst wird und anschließend im Routinebetrieb die Summe der beiden Messwerte $d_{M1}$ und $d_{M2}$ von dem Messspalt $d_A$ subtrahiert wird:

$$d = d_A - (d_{M1} + d_{M2})$$

Die Wegmesssensoren werden in C- oder O-rahmenförmigen Messmechaniken integriert und finden ihren Einsatz im industriellen Umfeld. Sofern bei der Konstruktion einer Vorrichtung zur Dickenmessung keine weiteren Vorkehrungen getroffen werden, beeinflussen thermische Änderungen der Umgebung den mechanischen Aufbau, insbesondere den Messspalt $d_A$, und damit das Messergebnis $d$.

Bei einfachen kleinen Messmechaniken kann die Messmechanik aus temperaturstabilem Material ausgeführt werden. Bei der Dickenmessung von Stückgut kann nach jeder Routinemessung das Kalibrationsteil gemessen werden, um den Effekt des sich ändernden Messspaltes zu eliminieren.

Bei der Messung von breiten bandförmigen Materialien, insbesondere Coils, Innerliner etc. ist der vordefinierte Abstand zwischen den beiden Messsensoren jedoch kritisch. Gerade bei der Messung von metallischen Bändern in Breiten bis 1-2 m oder bei Papierbahnen bis 6 m Breite und darüber hinaus ist besonders problematisch, dass C-Bügel und/oder O-Rahmen über die Breite des Bandmaterials als Messobjekt mechanisch nicht stabil zu halten sind. Folglich ist der Abstand der Wegmesssensoren zueinander nicht konstant. So haben bereits geringste Änderungen der Mechanik bei geforderten Messgenauigkeiten im Mikrometer-Bereich Einfluss auf den Dicken-Messwert. Solche Änderungen der Mechanik können zum Beispiel durch Vibrationen auftreten oder durch eine Längenausdehnung infolge von Temperaturänderungen verursacht werden. Somit entsteht eine Abstandsänderung der Wegmesssensoren aufgrund von Vibration oder thermischer Längenausdehnung des Maschinenrahmens. Zum Beispiel würde sich bei einem Maschinenrahmen aus V2A-Stahl mit einem Ausdehnungskoeffizienten von 16 ppm/K der Abstand zwischen den beiden Wegmesssensoren bei einer Temperaturänderung von 10°C und einem Abstand von 1 m zwischen dem an einem Obergurt gelagerten Wegmesssensor und dem an einem Untergurt gelagerten Wegmesssensor um 160 $\mu$m ändern. Folglich ist bei Dickenmessungen, die häufig Genauigkeiten im Mikrometerbereich erfordern, eine präzise Messung aufgrund von Vibrations- und/oder Temperatureinflüssen nicht möglich. Eine noch größere Abstandsänderung tritt bei den häufig in der Praxis verwendeten Aluminium-Profilen auf, da Aluminium einen Ausdehnungskoeffizienten von 23 ppm/K hat.

Zur Messung von breiten, bandförmigen Materialien, insbesondere Coils, Innerliner etc. könnte man möglicherweise eine temperaturstabile Messmechanik durch ausschließliche Verwendung von temperaturstabilen Materialien herstellen. Die Verwendung von vibrationsfesten oder temperaturstabilen O-Rahmen bzw. C-Rahmen zur Vermeidung von Messungenauigkeiten erfordert jedoch einen hohen mechanischen Aufwand und spezielle Materialien wie zum Beispiel Invar (eingetragene Marke), wodurch erhebliche Kosten verursacht werden. Die Wegmesssensoren müssten bei den zuvor genannten Messaufgaben mit Linearachsen traversierend über dem Material bewegt werden. Des Weiteren besteht die Möglichkeit in kurzen Zeitabständen das Kalibrationsteil zu messen nur außerhalb des Materialbandes. Folglich kann eine Veränderung des Messspaltes über dem Material nicht erfasst und kompensiert werden.

Aus der Praxis ist ein C-Rahmen bekannt, in dem die Wegmesssensoren auf einer Glasplatte mit einem geringen thermischen Ausdehnungskoeffizienten montiert sind. Diese Ausgestaltung hat jedoch den erheblichen Nachteil, dass bei einem C-Rahmen mit langen Schenkeln die Montage der Messsensoren äußerst aufwendig ist. Des Weiteren ist bei der Ausgestaltung mit Glas sehr problematisch, dass Glas sehr leicht brechen kann und daher für einen Einsatz im rauen industriellen Produktionsumfeld ungeeignet ist.

Aus der DE 42 20 501 A1 ist ein Verfahren und eine Vorrichtung zur optischen Dickenmessung an bahnförmigen Materialien bekannt, wobei zur Vermeidung des mechanischen Aufwands der relative Abstand der beiden Wegmesssensoren jeweils mittels eines Laser-Punktprojektors ermittelt wird. Dieser Laser-Punkprojektor projiziert einen Laserstrahl in die Bewegungsrichtung der Wegmesssensoren. Die beiden Laser-Punkprojektoren sind an einer temperaturstabilen und vibrationsfesten Halterung aus Invar befestigt, so dass die relative Position der Laserquellen zueinander möglichst konstant bleibt. Die bekannte Vorrichtung ist jedoch insoweit problematisch, dass die optischen Sensoren für ein im industriellen Einsatz übliches raues Produktionsumfeld nicht geeignet sind, da die optischen Sensoren dort Vibrationen, Schock, Verschmutzung etc. ausgesetzt sind. Zudem ist eine exakte Ausrichtung der Laser schwierig. Ein weiterer Nachteil der bekannten Vorrichtung besteht darin, dass durch die Montage der Laser auf einer Seite bereits bei geringsten Bewegungen ein umso stärkerer Strahlversatz auftritt, je weiter der Sensor von der Strahlquelle entfernt ist. Aus der DE 44 07 215 A1 ist eine Vorrichtung zur Dickenmessung eines bahnförmigen Messobjektes in einem Messspalt bekannt. Der vorliegenden Erfindung liegt daher die Aufgabe zugrunde, eine Vorrichtung und ein Verfahren zur Dickenmessung eines Messobjekts der eingangs genannten Art derart auszugestalten und weiterzubilden, das im industriellen Einsatz mit konstruktiv einfachen und kostengünstigen Mitteln eine robuste und industrietaugliche Messmechanik mit hoher Messgenauigkeit gewährleistet ist.

Die voranstehende Aufgabe ist durch die Merkmale des Patentanspruchs 1 gelöst.

Des Weiteren ist die voranstehende Aufgabe in verfahrensmäßiger Hinsicht durch die Merkmale des Patentanspruchs 15 gelöst. In erfindungsgemäßer Weise ist erkannt worden, dass es von ganz enormem Vorteil ist, wenn eine Lageveränderung der Wegmesssensoren im Raum mittels einer einfachen Referenzeinrichtung zu kompensieren ist. Dadurch könnte der Messrahmen bzw. die Messmechanik weiterhin aus herkömmlichen Materialien ohne hohe Anforderungen an Stabilität und Temperaturausdehnung bestehen. Zweckmäßigerweise ist dazu ein Kompensationssensor an einen Wegmesssensor gekoppelt. Der Kompensationssensor misst, vorzugsweise kontinuierlich oder in kurzen Intervallen, den Abstand zu einem Referenzlineal, um so eine Lageveränderung des Wegmesssensors und damit eine Veränderung des Messspalts zu erfassen und zu kompensieren. Das Referenzlineal bildet dabei eine Messfläche für den Kompensationssensor. Im Konkreten ist das Referenzlineal als eine Seite einer in die Messmechanik integrierten rahmenförmigen Referenzeinrichtung ausgeführt. Dabei ist die Referenzeinrichtung derart ausgestaltet, dass während der Dickenmessung eines Messobjekts der Abstand zwischen dem Referenzlineal und der dem Referenzlineal gegenüberliegenden Seite der Referenzeinrichtung bekannt oder erfasst ist. Erfindungsgemäß kann somit eine Lageveränderung eines Wegmesssensors kompensiert werden, wenn der Abstand zwischen dem Referenzlineal und der dem Referenzlineal gegenüberliegenden Seite der Referenzeinrichtung konstant gehalten oder gemessen wird.

Folglich ist mit der erfindungsgemäßen Vorrichtung und dem erfindungsgemäßen Verfahren mit konstruktiv einfachen und kostengünstigen Mitteln eine robuste und industrietaugliche Messmechanik mit hoher Messgenauigkeit für den industriellen Einsatz gewährleistet. Die erfindungsgemäße Vorrichtung und das erfindungsgemäße Verfahren kann bei der Dickenmessung von bahnförmigem Material und/oder bei der Dickenmessung von Stückgut eingesetzt werden.

Des Weiteren sei darauf hingewiesen, dass die rahmenförmige Referenzeinrichtung die Form eines Rahmens im weitesten Sinne aufweist. Die Referenzeinrichtung ist nicht auf eine Ausgestaltung als vollständig geschlossener Rahmen festgelegt, der durchgehend eine Seitenleiste aufweisen muss.

Das Referenzlineal kann aus Metall bestehen, aber auch andere Materialien mit hoher Steifigkeit und geringer Verformung, z.B. CFK-Carbon, GFK-Glasfaser oder keramische Materialien oder dgl. sind denkbar.

Hinsichtlich einer optimalen Geometrie und einer einfachen Integration in die Messmechanik kann die Referenzeinrichtung im Wesentlichen rechteckig ausgestaltet sein. Somit ist ein leichter und unkomplizierter Einbau bzw. einfache Integration in die Messmechanik möglich.

Im Hinblick auf eine präzise Messung kann der Kompensationssensor als kapazitiver Sensor ausgeführt sein. Somit bestitzt der Kompensationssensor eine extrem hohe Auflösung und erlaubt damit eine sehr gute Kompensation von geringsten Lageveränderungen des Wegmesssensors bzw. Messspaltveränderungen.

In besonders vorteilhafter Weise kann der Kompensationssensor als Wirbelstromsensor ausgeführt sein. Wirbelstromsensoren sind unempfindlich gegen Öl, Wasser und Staub im Messspalt und sind daher gerade bei schwierigen Umgebungsbedingungen problemlos und effektiv einsetzbar.

Grundsätzlich ist auch der Einsatz von weiteren Typen von Wegmesssensoren als Kompensationssensor denkbar. Zum Beispiel der Einsatz von optischen oder magnetischen Sensoren. Jedenfalls ist für den Einsatz der Kompensationssensoren besonders vorteilhaft, dass die relative Abstandsänderung zwischen der Traverse, die den Wegmesssensor trägt, und dem Referenzlineal meist nur gering ist. Folglich benötigt der Kompensationssensor nur einen geringen Messbereich. Prinzipiell muss der Kompensationssensor nur einen derart großen Messbereich besitzen, dass die maximale Abweichung der Traverse beim Meßvorgang erfasst werden kann. Die Abweichung kann aufgrund von Durchbiegung, durch Vibrationen oder durch Temperaturausdehnung auftreten.

In einer vorteilhaften Ausgestaltung kann die Messmechanik derart ausgestaltet sein, dass durch die Messmechanik beidseitig auf das Messobjekt Wegmesssensoren gerichtet sind, wobei auf beiden Seiten des Messobjekts ein Kompensationssensor an einen Wegmesssensor gekoppelt ist. Die beiden gegenüberliegenden Seiten der Referenzeinrichtung können dabei auf beiden Seiten des Messobjekts als Referenzlineal für den jeweiligen Kompensationssensor ausgebildet sein.

In weiter vorteilhafter Weise kann die Referenzeinrichtung Abstandshalter aus einem temperaturstabilen Material umfassen, wobei die Abstandshalter die Referenzlineale starr miteinander verbinden. Als temperatustabiles Material kann insbesondere spezielle Keramik oder Stahl mit geringem Ausdehnungskoeffizienten wie z.B. Invar, Kovar, Zerodur (eingetragene Marken) etc. verwendet werden. Somit sorgen die Abstandshalter dafür, dass sich der Abstand der Referenzlineale zueinander nicht verändert. Folglich ist eine gesamte Ausgestaltung der rahmenförmigen Referenzeinrichtung aus temperaturstabilem Material nicht erforderlich.

Alternativ könnte man die Referenzeinrichtung auch mit Abstandshaltern aus nicht temperaturstabilem Material ausbilden. Dazu müsste man einen bekannten Temperaturgang des Materials mit einem Temperatursensor messen und damit eine Abstandsänderung der Referenzlineale rechnerisch kompensieren.

In einer besonders vorteilhaften Ausgestaltung kann die Referenzeinrichtung über einen ersten Abstandshalter fest und über einen zweiten Abstandshalter schwimmend an dem Maschinenrahmen gelagert sein. Die feste Lagerung könnte mit einem Bolzen im Abstandshalter realisiert sein, wobei der Bolzen in einer U-förmigen Lagerung am Maschinenrahmen liegt. Die schwimmende Lagerung könnte über ein Rollenlager realisiert sein. Somit sind die Referenzlineale auf einer Seite der rahmenförmigen Referenzeinrichtung fest gelagert und auf der anderen Seite z.B. nur lose aufgelegt. Dadurch wird eine Verspannung der Referenzlineale durch Temperaturdehnung vermieden, so dass die Referenzlineale immer spannungsfrei sind.

Hinsichtlich der Vermeidung einer Verspannung der Referenzlineale kann die Referenzeinrichtung auch über eines der beiden Referenzlineale an dem Maschinenrahmen befestigt sein, wobei das Referenzlineal auf seiner einen Seite fest und auf seiner anderen Seite schwimmend gelagert ist.

In besonders vorteilhafter Weise kann der Kompensationssensor derart an den Wegmesssensor angeordnet sein, dass die Messpunkte des Kompensationssensors und des Wegmesssensors in einer Messachse liegen. Sind beispielsweise die Kompensationssensoren auf einer Traverse mit den Wegmesssensoren fest zueinander angeordnet und messen die Wegmesssensoren gegen die Referenzlineale, so können die Kompensationssensoren in der Messachse fluchtend an den Wegmesssensoren ausgerichtet sein.

In einer konkreten Ausgestaltung kann die Referenzeinrichtung über beide Referenzlineale an dem Maschinenrahmen befestigt sein, wobei die Referenzlineale auf einer Seite fest und auf der anderen Seite schwimmend gelagert sind. Dabei messen Abstandssensoren vorzugsweise kontinuierlich oder in kurzen Intervallen den Abstand der beiden Referenzlineale zueinander. Somit wird eine Abstandsänderung zwischen den beiden Referenzlinealen detektiert und kann zur Kompensation des Messergebnisses während des Messvorgangs verwendet werden. Als Abstandssensoren können Messtaster eingesetzt werden. Die Messtaster können über temperaturstabile Abstandshalter mit dem ersten, vorzugsweise oberen, Referenzlineal verbunden sein und messen die Abstandsänderung durch Antasten gegen das zweite, vorzugsweise untere, Referenzlineal.

Grundsätzlich sind auch andere zum Beispiel berührungslose Abstandssensoren denkbar, die an einem temperaturstabilen Abstandshalter mit geringem Ausdehnungskoeffizienten angebracht sein können und die Abstandsänderung der Referenzlineale zueinander messen. Die Abstandshalter dienen dazu, dass ein Abstandssensor mit kleinem Messbereich und damit hoher absoluter Auflösung verwendet werden kann. Der Abstandshalter ermöglicht somit, den effektiven Messabstand zwischen oberem und unterem Referenzlineal zu verringern, da er selbst keine Messwertänderung verursacht.

In vorteilhafter Weise kann auf beiden Seiten des Wegmesssensors ein Kompensationssensor angeordnet sein, damit sich eine Verkippung in Traversierrichtung aus den beiden Messwerten der Kompensationssensoren wieder herausmittelt.

In einer konkreten Ausgestaltung kann die Messmechanik einen Wegmesssensor einseitig auf das Messobjekt richten, wobei das Messobjekt auf einer Auflage, insbesondere einer Walze, aufliegt. Die Auflage kann dabei als ein Teil der dem Referenzlineal gegenüberliegenden Seite der Referenzeinrichtung ausgeführt sein. Mit dem Referenzlineal können Abstandssensoren, insbesondere Laser-Triangulationssensoren, Seilzugssensoren, Messtaster etc., vorzugsweise über temperaturstabile Abstandshalter verbunden sein. Die Abstandssensoren messen dabei den Abstand zwischen dem Referenzlineal und der Auflage.

In weiter vorteilhafter Weise können die Abstandssensoren gegen eine Referenzfläche messen, wobei die Referenzfläche derart angeordnet sein kann, dass der Abstand zwischen der Referenzfläche und dem Referenzlineal identisch ist mit dem Abstand zwischen dem Referenzlineal und der Oberfläche der Auflage. Die Referenzfläche kann jeweils seitlich neben der Auflage angeordnet sein. Somit kann bei einer Walze als Auflage ein Verschleiß von Messtastern als Abstandssensoren vermieden werden. In vorteilhafter Weise kann das Referenzlineal an dem Maschinenrahmen befestigt sein, wobei das Referenzlineal auf seiner einen Seite fest und auf seiner anderen Seite schwimmend gelagert ist.

Hinsichtlich der Dickenmessung von Bandmaterial können die Wegmesssensoren durch die Messmechanik mittels einer Traversiereinheit, insbesondere einer Linearachse, quer zum Messobjekt zur traversierenden Messung bewegt werden. Die Wegmesssensoren können an einem Obergurt und ggf. an einem Untergurt gelagert werden. Bei der traversierenden Messung können dann die Wegmesssensoren synchron über eine Linearachse quer zum Bandmaterial - Messobjekt - bewegt werden. Die Anforderungen an Ober- und Untergurt im Hinblick auf mechanische und thermische Stabilität können geringer gehalten werden, da die Kompensation von - das Messergebnis verfälschende - Bewegungen bei der Messung des Abstandes der Wegmesssensoren zueinander mittels der Kompensationssensoren und der Referenzlineale möglich ist.

In vorteilhafter Weise kann die Referenzeinrichtung mit einem oder mehreren Kalibrationsteilen mit vordefinierter Dicke kalibriert werden, wobei an mehreren Punkten, insbesondere kontinuierlich, der Messspalt und ein zwischen Kompensationssensor und Referenzlineal gebildeter Kompensationsspalt gemessen wird. Somit kann die rahmenförmige Referenzeinrichtung geeicht werden. Die Referenzlineale müssen nicht perferkt ausgerichtet sein, da durch den Kalibriervorgang die Geradheit der Referenzlineale bestimmt und gespeichert werden kann.

In einer weiter vorteilhaften Ausgestaltung kann nach jeder Traversierung in einer Parkposition der Messspalt neu erfasst wird. Somit kann eine thermische Veränderung der mechanischen Kopplung zwischen Wegmesssensor und Kompensationssensor ausgeglichen werden. Bei thermischen veränderlichen Abstandshaltern wird in diesem Schritt auch die Ausdehnung des Abstandshalters erfasst.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen

Fig. 1     in einer schematischen Ansicht ein aus dem Stand der Technik bekanntes Grundprinzip der Dickenmessung bzw. -Kalibrierung mit zwei Wegmesssensoren,

Fig. 2     in einer schematischen Ansicht ein Ausführungsbeispiel einer erfindungsgemäßen Vorrichtung und eines erfindungsgemäßen Verfahrens

Fig. 3     in einer schematischen Ansicht ein weiteres Ausführungsbeispiel einer erfindungsgemäßen Vorrichtung in einem O-Rahmen angeordnet,

Fig. 4     in einer schematischen Ansicht ein weiteres Ausführungsbeispiel einer erfindungsgemäßen Vorrichtung in einem O-Rahmen angeordnet,

Fig. 5     in einer schematischen Ansicht ein weiteres Ausführungsbeispiel einer erfindungsgemäßen Vorrichtung und

Fig. 6     in einer schematischen Ansicht ein Ausführungsbeispiel einer erfindungsgemäßen Vorrichtung mit nur einem Referenzlineal.

Fig. 1 zeigt in einer schematischen Ansicht ein aus dem Stand der Technik bekannte Grundprinzip der differentiellen Dickenmessung bzw. -Kalibrierung mit zwei Wegmesssensoren anhand einer Sensor- und Kalibrationsanordnung. Jeweils ein Wegmesssensor 1 und 2 misst gegen die obere und untere Oberfläche des Messobjektes. Die Dicke erhält man, indem man vom Messspalt $d_A$ jeweils den Messwert $d_{M1}$ und $d_{M2}$ subtrahiert. Die Grundvoraussetzung für einen korrekten Dickenmesswert ist, dass der Messspalt $d_A$, d.h. der Abstand der beiden Wegmesssensoren 1 und 2 zueinander, konstant bleibt. Dies könnte durch eine geeignete Aufhängung und Führung der Wegmesssensoren 1 und 2 erreicht werden, was jedoch einen hohen Aufwand bei der Auswahl der Materialien (hochfeste, temperaturstabile Materialien) und der Konstruktion bedeutet.

Wesentlich einfacher, kostengünstiger und genauer ist es, wenn der Abstand selbst nicht konstant gehalten wird, sondern mit Kompensationssensoren gemessen und rechnerisch bei der Dickenberechnung berücksichtigt wird.

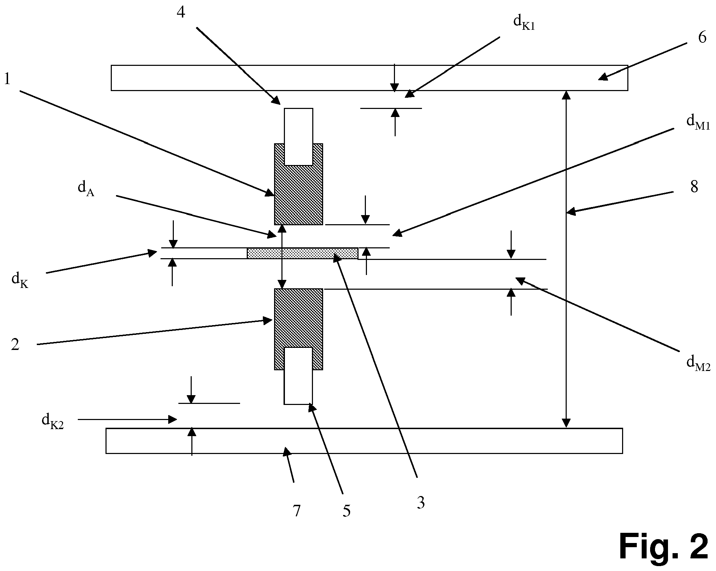

Fig. 2 zeigt in einer schematischen Ansicht ein Ausführungsbeispiel einer erfindungsgemäßen Vorrichtung und eines erfindungsgemäßen Verfahrens. Zwei Wegmesssensoren 1 und 2 messen jeweils den Abstand zur Oberfläche eines Messobjektes bzw. eines Kalibrationteils 3 mit der Kalibrationsteildicke $d_K$. Mit dem Wegmesssensor 1 ist ein Kompensationssensor 4 und mit dem Wegmesssensor 2 ist ein Kompensationssensor 5 verbunden. Der Kompensationssensor 4 misst gegen das obere Referenzlineal 6 und der Kompensationssensor 5 misst gegen das untere Referenzlineal 7.

Die Referenzlineale 6 und 7 in Fig. 2 müssen einen konstanten oder zumindest bekannten Abstand 8 haben. Der Abstand 8 kann beispielsweise durch zwei Rundstäbe aus Invar konstant gehalten werden. Invarstäbe sind mechanisch stabil und besitzen einen sehr geringen Längenausdehnungskoeffizienten, so dass sich auch bei Temperaturänderungen deren Länge nicht oder nur vernachlässigbar gering verändert.

Der in Fig. 2 dargestellte Abstand 8 könnte aber auch gemessen werden, indem beispielsweise zwei Abstandssensoren jeweils auf der linken und rechten Seite der Referenzlineale 6 und 7 den Abstand 8 der Referenzlineale 6 und 7 kontinuierlich oder von Zeit zu Zeit messen. Als Abstandssensoren können beispielsweise Laser-Triangulationssensoren oder Seilzugsensoren verwendet werden, die einen hinreichend großen Messbereich besitzen. Günstiger und genauer sind jedoch Messtaster, die mit Abstandshaltern aus Invar am oberen Referenzlineal 6 befestigt sind und gegen das untere Referenzlineal 7 messen. Durch die Invar-Abstandshalter wird eine mechanisch stabile und temperaturstabile Verlängerung der Messtaster erreicht, die dann nur noch einen kleinen Messbereich aufweisen müssen. Durch den kleineren Messbereich, der im Prinzip nur die zu erwartenden Abstandsänderungen der Referenzlineale, beispielsweise aufgrund von Vibrationen oder Temperaturausdehnung im Maschinenrahmen, abdecken muss.

Gemäß Fig. 2 ist $d_{M1}$ der Messwert des oberen Wegmesssensors 1 und $d_{M2}$ der Messwert des unteren Wegmesssensors 2. Damit ergibt sich mit der Dicke $d_K$ des Kalibrationsteils 3 der Messspalt $d_A$ in der Parkposition durch:

$$d_A = d_K + d_{M1} + d_{M2}$$

In einem ersten Schritt wird mit einem eingeschwenkten Kalibrationsteil an $n$ Punkten die Maße der beiden Kompensationsspalte $d_{K1,i}$ und $d_{K2,i}$, sowie der Messspalt $d_{A,i}$ mit $i = 1,...,n$ gemessen und hinterlegt.

Ferner wird aus diesen Daten die Veränderung des Messspaltes $\Delta d_{A,i}$ mit $i = 1,...,n$ in Bezug auf die Dicke in der Parkposition $d_A$ ermittelt. Nach jeder Traversierung wird in der Parkposition das Maß $d_A$ neu erfasst, um die thermische Veränderung der mechanischen Kopplung zwischen Wegmesssensor und Kompensationssensor auszugleichen. Bei thermisch veränderlichen Abstandshaltern wird in diesem Schritt auch die Ausdehnung des Abstandshalters erfasst. Mit Hilfe der Werte $\Delta d_{A,i}$ kann der Messspalt über die gesamte Traversierbreite neu berechnet werden. Werden die Kompensationsmessspalte vernachlässigt, so ergibt sich der Messspalt $d_{A,i}$ zur Traversierung $t$ folgendermaßen:

$$\bigvee_{i=1}^{n} d_{A,i}(t) = d_A(t) + \Delta d_{A,i}$$

Erfolgt eine Änderung der Linearführung oder deren Aufhängung in Richtung des Messspalts, so wird die Änderung direkt auf das Signal des Kompensationssensors übertragen. Es kommt somit zu einer Signaländerung

$$\Delta d_{K1,i}(t) = d_{K1,i}(t-1) - d_{K1,i}(t),$$

bzw.

$$\Delta d_{K2,i}(t) = d_{K2,i}(t-1) - d_{K2,i}(t)$$

zur Traversierung $t$. Der Messspalt über seiner gesamten Breite berechnet sich damit durch:

$$\overset{n}{\underset{i=1}{\forall}}\, d_{A,i}(t) = d_A(t) + \Delta d_{A,i} + \Delta d_{K1,i}(t) + \Delta d_{K2,i}(t)$$

Auf diese Weise wird der Messspalt rechnerisch konstant gehalten. Die Dicke $d$ eines Messobjekts im Punkt $i$ während der Traversierung $t$ ergibt sich damit aus:

$$d_i(t) = d_{A,i}(t) - \left( d_{M1,i}(t) + d_{M2,i}(t) \right)$$

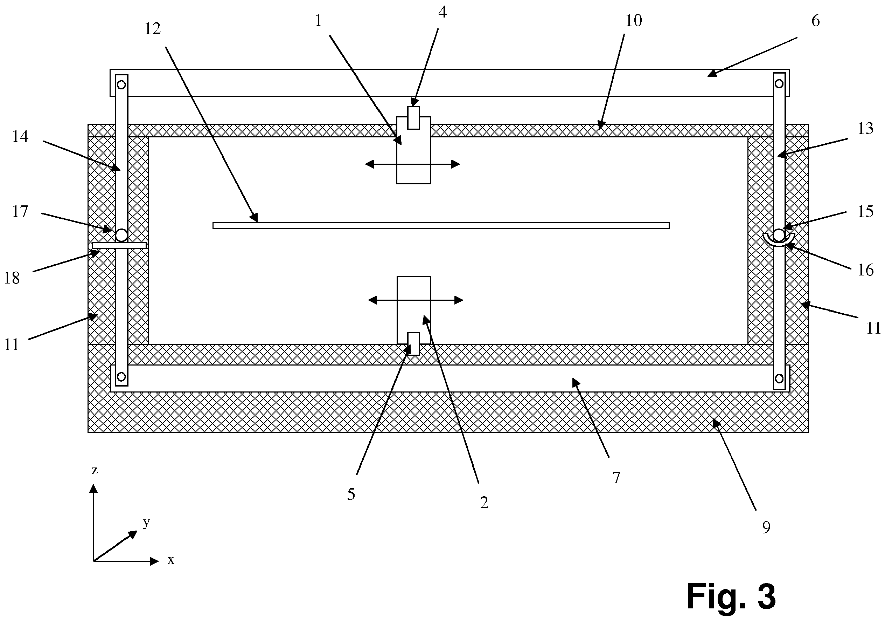

Fig. 3 zeigt in einer schematischen Ansicht ein weiteres Ausführungsbeispiel einer erfindungsgemäßen Vorrichtung, die in einem O-rahmenförmigen Maschinenrahmen integriert ist. Der Maschinenrahmen umfasst ein Maschinenbett 9, ein Obergurt 10 und zwei Stützen 11, die das Maschinenbett 9 und den Obergurt 10 zu einem O-Rahmen verbinden. Der Maschinenrahmen besteht aus einer einfachen, günstigen Stahlkonstruktion, ohne dass besondere Maßnahmen zur Aussteifung oder Temperaturkompensation, z.B. durch Verwendung teurer, temperaturstabiler Materialien, getroffen wurden. Das Referenzlineal 6 ist oberhalb und das Referenzlineal 7 unterhalb des Messobjekts 12 angeordnet und mittels Abstandshalter 13 und 14 in Form von Invar-Profilen starr miteinander verbunden. Die Referenzlineale 6 und 7 bilden zusammen mit den beiden Abstandshaltern 13 und 14 die rahmenförmige Referenzeinrichtung.

Durch die starre Verbindung der Referenzlineale 6 und 7 über die Abstandshalter 13 und 14 ist eine Längenausdehnung aufgrund von Temperaturänderungen in z-Richtung vermieden oder zumindest erheblich minimiert. Die Referenzlineale 6 und 7 in Fig. 3 müssen dabei nicht aus einem Material mit geringem Längenausdehnungskoeffizienten bestehen, da eine Längenausdehnung der Referenzlineale 6 und 7 in x-Richtung nicht in die Dickenberechnung des Messobjekts 12 eingeht. Damit durch Längenausdehnung jedoch keine mechanischen Spannungen in den Referenzlinealen 6 und 7 entstehen, die möglicherweise zu einer Durchbiegung oder Verwindung der Referenzlineale 6 und 7 und damit zu einer Messwertverfälschung führen könnten, sind die Referenzlineale 6 und 7 auf einer Seite fest und auf der anderen Seite schwimmend gelagert. Die feste Lagerung ist durch einen Lagerbolzen 15 im Abstandshalter 13 realisiert, wobei der Lagerbolzen 15 in einer U-förmigen Lagerung 16 - U-Profil - an einer Stütze 11 des Maschinenrahmens liegt. Damit ist eine Bewegung der Referenzeinrichtung in x-Richtung unterbunden, während eine Drehung um die y-Achse ermöglicht ist. Auf der andern Seite der Referenzeinrichtung ist der Abstandshalter 14 mit einem Rollenlager 17, das auf einer ebenen Fläche 18 aufliegt, beweglich in x-Richtung gelagert. Durch diese Konstruktion werden ggf. auftretende Spannungen, Vibrationen oder Längenausdehnungen des Maschinenrahmens nicht auf die Referenzlineale 6 und 7 übertragen. Folglich ist die rahmenförmige Referenzeinrichtung in ihrer Geometrie insoweit temperaturinvariant, als die Längenänderung in x-Richtung den Abstand der Referenzlineale in z-Richtung nicht verändert. Die Längenänderung in x-Richtung kann zwar auftreten, ist aber für die Dickenmessung nicht ausschlaggebend.

In Fig. 3 sind die Kompensationssensoren 4 und 5 auf der Traverse mit den Wegmesssensoren 1 und 2 fest zueinander angeordnet und messen gegen die Referenzlineale 6 und 7. Die Traverse umfasst ein Obergurt 10 und ein zum Maschinenbett 9 zugeordnetes Untergurt. Damit Verkippungen der Traverse keinen Einfluss auf das Messergebnis haben, sind die Kompensationssensoren 4 und 5 in der z-Achse fluchtend an den Wegmesssensoren 1 und 2 ausgerichtet, d.h. die Messpunkte des jeweiligen Mess- und Kompensationssensors liegen in einer Achse, die parallel zur z-Achse und überwiegend rechtwinklig zur Traversierrichtung x liegt.

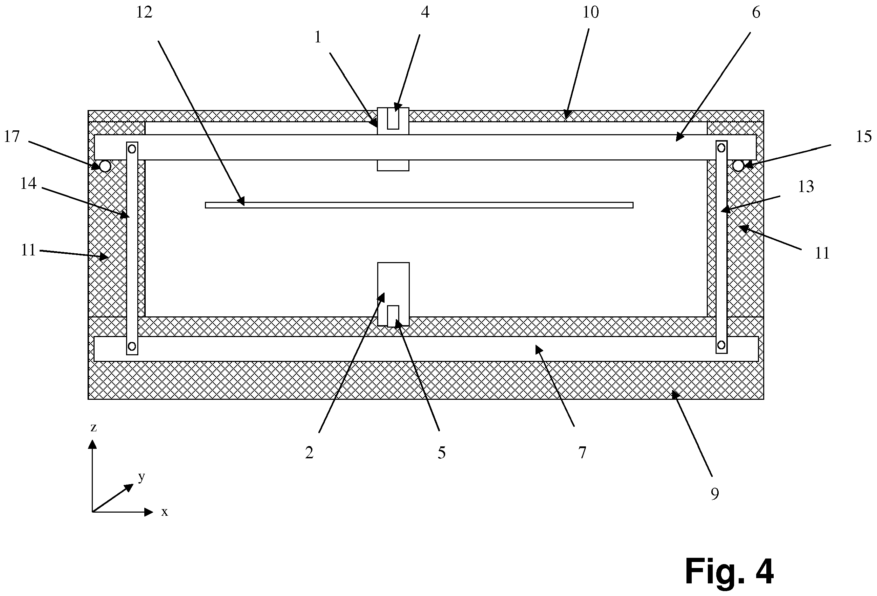

Fig. 4 zeigt in einer schematischen Ansicht ein weiteres Ausführungsbeispiel einer erfindungsgemäßen Vorrichtung in einem O-Rahmen angeordnet. In dem Ausführungsbeispiel gemäß Fig. 4 sind die beiden Referenzlineale 6 und 7 wie in dem Ausführungsbeispiel aus Fig. 3 starr mittels temperaturstabilen Abstandshaltern verbunden. Im Unterschied zu dem Ausführungsbeispiel gemäß Fig. 3 ist lediglich das obere Referenzlineal 6 mit dem Maschinenrahmen verbunden. Die Befestigung des Referenzlineals 6 am Maschinenrahmen ist derart ausgeführt, dass eine Seite drehbar um einen Lagerbolzen 15 und die andere Seite beweglich mittels Rollenlager 17 gelagert ist. Das untere Referenzlineal 7 hängt über die Abstandshalter 13 und 14 am oberen Referenzlineal 6. Um eine Bewegung in y-Richtung zu unterbinden, sind die beiden Referenzlineale 6 und 7 mittels Kugelrollen derart gelagert, dass die Referenzlineale 6 und 7 auf einer Seite mittels einer Feder gegen die Kugelrollen auf der anderen Seite gedrückt werden (in Fig. 4 nicht gezeigt). Damit ist in y-Richtung eine stabile Führung erreicht, ohne dass eine Bewegung in x-Richtung oder z-Richtung behindert wäre.

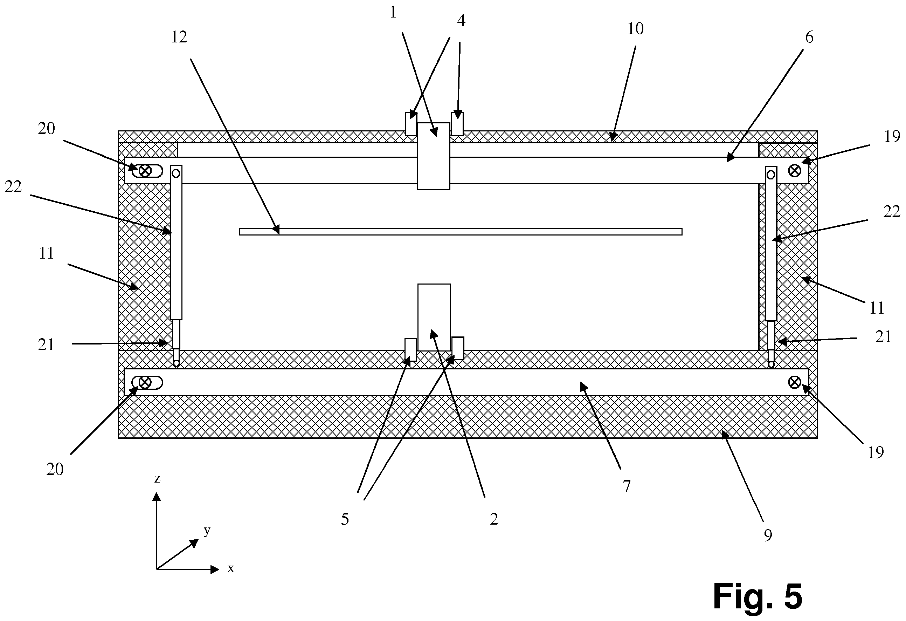

Fig. 5 zeigt in einer schematischen Darstellung ein weiteres Ausführungsbeispiel einer erfindungsgemäßen Vorrichtung zur Dickenmessung. In dem Ausführungsbeispiel gemäß Fig. 5 sind die beiden Referenzlineale 6 und 7 nicht mit temperaturstabilen Abstandshaltern miteinander verbunden, sondern jeweils direkt am Maschinenrahmen montiert. Auf einer Seite der Referenzlineale 6 und 7 ist jeweils eine feste, drehbare Lagerung 19 um die y-Achse mit einem Lagerbolzen vorgesehen, während die andere Seite der Referenzlineale 6 und 7 in x-Richtung beweglich mittels Rollenlagern 20 realisiert ist. Da bei dieser Konstruktion die Bewegungen des Maschinenrahmens aufgrund von Vibrationen oder Temperaturausdehnungen sich direkt auf die Referenzlineale 6 und 7 überträgt, muss der Abstand der Referenzlineale 6 und 7 zueinander gemessen werden. Dies erfolgt mit zwei Messtastern 21 als Abstandssensoren, die über Abstandshalter 22 aus Invar mit dem oberen Referenzlineal 6 verbunden sind. Die Messtaster 21 messen die Abstandsänderung durch Antasten gegen das untere Referenzlineal 7. In dem Ausführungsbeispiel gemäß Fig. 5 werden auf jeder Seite der Wegmesssensoren 1 und 2 zwei Kompensationssensoren 4 bzw. 5 verwendet. Da eine fluchtende Anordnung wie bei dem Ausführungsbeispiel aus Fig. 3 konstruktiv nicht möglich ist, werden somit zwei Kompensationssensoren 4 links und rechts vom Wegmesssensor 1 und zwei Kompensationssensoren 5 links und rechts vom Wegmesssensor 2 verwendet. Dadurch mittelt sich eine Verkippung in x-Richtung aus den beiden Messwerten der Kompensationssensoren 4 bzw. 5 wieder heraus.

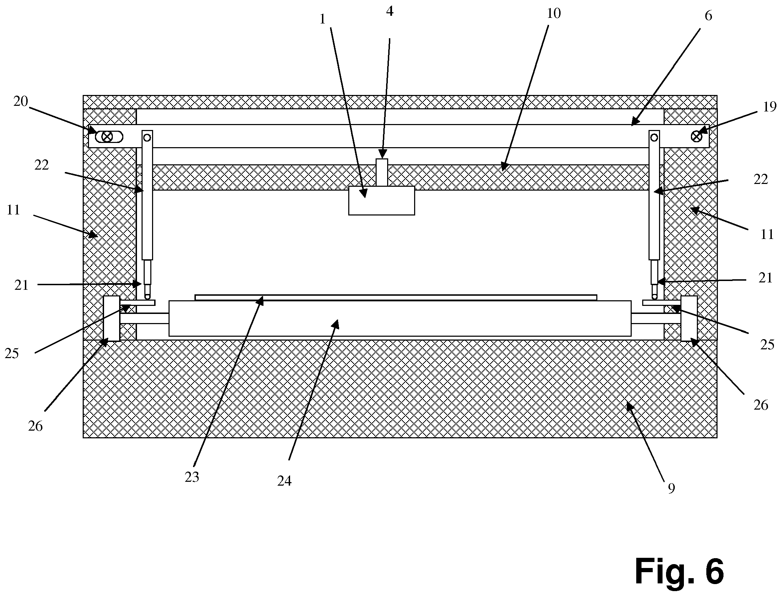

Fig. 6 zeigt in einer schematischen Darstellung ein Ausführungsbeispiel einer erfindungsgemäßen Vorrichtung mit nur einem Referenzlineal 6. Das Referenzlineal 6 ist auf der einen Seite mit einer festen, drehbaren Lagerung 19 um die y-Achse mittels Lagerbolzen am Maschinenrahmen befestigt. Auf seiner anderen Seite ist das Referenzlineal 6 in x-Richtung beweglich mittels Rollenlager 20 am Maschinenrahmen angebracht.

Die Dickenmessung erfolgt bei dem Ausführungsbeispiel aus Fig. 6 nur mit einem Wegmesssensor 1, der oberhalb des Messobjektes 23 angeordnet ist. Der Wegmesssensor 1 misst gegen die Oberfläche des Messobjektes 23, beispielsweise ein Walzgut (Stahl, Aluminium etc.) oder eine Kunststoff- oder Gummibahn. Die bekannte Auflage des Messobjektes 23, beispielsweise eine Walze 24, repräsentiert die Unterseite des Messobjektes 23.

Der Wegmesssensor 1 kann ein Laser-Triangulationssensor sein. Der Vorteil des Laser-Triangulationssensors ist, dass damit ein relativ großer Abstand zwischen Messobjekt 23 und Wegmesssensor 1 erreicht werden kann. Dadurch ist der Wegmesssensor 1 geschützt vor eventuell auftretenden Verwerfungen oder Aufwölbungen des Messobjektes 23, die bei Prozessstörungen den Wegmesssensor 1 beschädigen könnten. Aufwölbungen können beispielsweise beim Walzen von Stahl oder Aluminium am Bandanfang oder -ende auftreten. Wenn der Wegmesssensor 1 zu nahe am Messobjekt 23 angebracht wäre, würde er durch diese Aufwölbungen beschädigt werden.

Da der Wegmesssensor 1 über einen Obergurt 10 des Maschinenrahmens geführt ist, übertragen sich Bewegungen des Maschinenrahmens direkt auf das Messergebnis. Mit dem Kompensationssensor 4 wird gegen das Referenzlineal 6 gemessen, das ebenfalls mit dem Maschinenrahmen verbunden ist. Damit sich Bewegungen des Maschinenrahmens nicht auf die Messung auswirken, wird der Abstand des Referenzlineals 6 zur Walzenoberfläche gemessen. Dies kann beispielsweise mittels Messtastern 21 erfolgen. Da sich die Walze 24 dreht und eine direkte Messung gegen die Walzenoberfläche aufgrund eines schnellen Verschleißes der Messtaster 21 ungünstig ist, wird gegen zwei Referenzflächen 25 links und rechts der Walze 24 gemessen. Die Referenzflächen 25 sind derart angeordnet, dass deren Abstand zum Referenzlineal 6 in z-Richtung identisch ist mit dem Abstand der Oberfläche der Walze zum Referenzlineal, d. h. dass die Oberflächen von Referenzflächen und Walzenoberfläche fluchtend angeordnet sind.

Die verwendeten Materialien für die Walze 24, den Lagerbock 26 der Walze 24 und die Referenzflächen 25 besitzen nahezu denselben Längenausdehnungskoeffizienten, damit in z-Richtung keine relativen Längenänderungen durch Temperaturänderungen auftreten. Statt der Verwendung von Referenzflächen und Messtastern kann auch mit berührungslosen Sensoren direkt gegen die Walzenoberfläche gemessen werden, beispielsweise am Rand der Walze 24, wo das Messobjekt 23 die Walze 24 nicht bedeckt.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

**Bezugszeichenliste**

| | |
|---|---|
| 1 | Wegmesssensor |
| 2 | Wegmesssensor |
| 3 | Kalibrationsteil |
| 4 | Kompensationssensor |
| 5 | Kompensationssensor |
| 6 | Referenzlineal |
| 7 | Referenzlineal |
| 8 | Abstand zwischen Referenzlinealen |
| 9 | Maschinenbett |
| 10 | Obergurt |
| 11 | Stütze |
| 12 | Messobjekt |

| | | |
|---|---|---|
| 13 | Abstandshalter | |
| 14 | Abstandshalter | |
| 15 | Lagerbolzen | |
| 16 | Lagerung U-Profil | |
| 17 | Rollenlager | |
| 18 | ebene Fläche | |
| 19 | Lagerbolzen drehbar um y-Achse | |
| 20 | Rollenlager beweglich in x-Richtung | |
| 21 | Messtaster | |
| 22 | Abstandshalter | |
| 23 | Messobjekt | |
| 24 | Walze | |
| 25 | Referenzfläche | |
| 26 | Lagerbock | |
| $d_A$ | Messspalt | |
| $d_{M1}$ | Messwert | |
| $d_{M2}$ | Messwert | |
| $d_K$ | Kalibrationsteildicke | |
| $d_{K1}$ | Kompensationsspalt | |
| $d_{K2}$ | Kompensationsspalt | |

**Patentansprüche**

1. Vorrichtung zur Dickenmessung eines vorzugsweise bahnförmigen oder stückgutförmigen Messobjekts (12, 23) in einem Messspalt ($d_A$) mit einer an einem Maschinenrahmen anbringbaren Messmechanik, wobei die Messmechanik zur Dickenmessung einen oder mehrere auf das Messobjekt (12, 23) gerichtete Wegmesssensor(en) (1, 2) umfasst, wobei an den Wegmesssensor bzw. an die Wegmesssensoren mindestens ein Kompensationssensor (4, 5) derart gekoppelt ist, dass zur Erfassung und Kompensation einer Veränderung des Messspalts ($d_A$) der Abstand zu einem Referenzlineal (6,7) mit dem Kompensationssensor (4, 5) messbar ist, **dadurch gekennzeichnet, dass** das Referenzlineal (6, 7) als eine Seite einer in die Messmechanik integrierten rahmenförmigen Referenzeinrichtung ausgeführt ist, und dass die rahmenförmige Referenzeinrichtung derart als Rahmen ausgestaltet ist, dass während der Dickenmessung der Abstand zwischen dem Referenzlineal (6, 7) und der dem Referenzlineal (6, 7) gegenüberliegenden Seite der Referenzeinrichtung durch Konstanthaltung oder Messung bekannt ist.

2. Vorrichtung nach Anspruch 1, **dadurch gekennzeichnet, dass** die Referenzeinrichtung im Wesentlichen rechteckig ausgestaltet ist.

3. Vorrichtung nach Anspruch 1, **dadurch gekennzeichnet, dass** der Kompensationssensor (4, 5) als kapazitiver Sensor oder als Wirbelstromsensor ausgeführt ist.

4. Vorrichtung nach einem der Ansprüche 1 bis 3, **dadurch gekennzeichnet, dass** die Messmechanik derart ausgestaltet ist, dass durch die Messmechanik beidseitig auf das Messobjekt Wegmesssensoren (1, 2) gerichtet sind, wobei auf beiden Seiten des Messobjekts (12, 23) ein Kompensationssensor (4, 5) an einen Wegmesssensor (1, 2) gekoppelt ist, und wobei die beiden gegenüberliegenden Seiten der Referenzeinrichtung auf beiden Seiten des Messobjekts als Referenzlineal (6,7) für den Kompensationssensor (4, 5) ausgebildet sind.

5. Vorrichtung nach Anspruch 4, **dadurch gekennzeichnet, dass** die Referenzeinrichtung Abstandshalter (13, 14) aus einem temperaturstabilen Material, insbesondere aus Invar, Kovar, Zerodur (eingetragene Marken) etc., umfasst, wobei die Abstandshalter (13, 14) die Referenzlineale (6, 7) starr miteinander verbinden.

6. Vorrichtung nach Anspruch 4 oder 5, **dadurch gekennzeichnet, dass** die Referenzeinrichtung über einen ersten Abstandshalter (13) fest und über einen zweiten Abstandshalter (14) schwimmend an dem Maschinenrahmen gelagert ist oder dass die Referenzeinrichtung über eines der beiden Referenzlineale (6, 7) an

dem Maschinenrahmen befestigt ist, wobei das Referenzlineal (6, 7) auf seiner einen Seite fest und auf seiner anderen Seite schwimmend gelagert ist.

7. Vorrichtung nach einem der Ansprüche 1 bis 6, **dadurch gekennzeichnet, dass** der Kompensationssensor (4, 5) derart an den Wegmesssensor (1, 2) angeordnet ist, dass die Messpunkte des Kompensationssensors (4, 5) und des Wegmesssensors (1, 2) in einer Messachse liegen.

8. Vorrichtung nach Anspruch 4, **dadurch gekennzeichnet, dass** die Referenzeinrichtung über beide Referenzlineale (6, 7) an dem Maschinenrahmen befestigt ist, wobei die Referenzlineale (6, 7) auf einer Seite fest und auf der anderen Seite schwimmend gelagert sind, und wobei Abstandssensoren, insbesondere Messtaster (21), den Abstand der beiden Referenzlineale (6, 7) zueinander messen, wobei
auf beiden Seiten des Wegmesssensors (1, 2) ein Kompensationssensor (4, 5) angeordnet sein kann.

9. Vorrichtung nach einem der Ansprüche 1 bis 3, **dadurch gekennzeichnet, dass** die Messmechanik den Wegmesssensor (1) einseitig auf das Messobjekt (12, 23) richtet,
wobei das Messobjekt (12, 23) auf einer Auflage, insbesondere einer Walze (24), aufliegt,
wobei die Auflage als ein Teil der dem Referenzlineal (6) gegenüberliegenden Seite der Referenzeinrichtung ausgeführt ist,
wobei mit dem Referenzlineal (6) Abstandssensoren, insbesondere Laser-Triangulationssensoren, Seilzugssensoren, Messtaster (21) etc., vorzugsweise über temperaturstabile Abstandshalter (13, 14) verbunden sind, und
wobei die Abstandssensoren den Abstand zwischen dem Referenzlineal (6) und der Auflage messen.

10. Vorrichtung nach Anspruch 9, **dadurch gekennzeichnet, dass** die Abstandssensoren gegen eine Referenzfläche (25) messen, wobei die Referenzfläche (25) derart angeordnet ist, dass der Abstand zwischen der Referenzfläche (25) und dem Referenzlineal (6) identisch ist mit dem Abstand zwischen dem Referenzlineal (6) und der Oberfläche der Auflage.

11. Vorrichtung nach Anspruch 9 oder 10, **dadurch gekennzeichnet, dass** das Referenzlineal (6) an dem Maschinenrahmen befestigt ist, wobei das Referenzlineal (6) auf seiner einen Seite fest und auf seiner anderen Seite schwimmend gelagert ist.

12. Verfahren zur Dickenmessung eines vorzugsweise bahnförmigen oder stückgutförmigen Messobjekts (12, 23) in einem Messspalt (dA), insbesondere unter Verwendung einer Vorrichtung nach einem der Ansprüche 1 bis 11, wobei eine Messmechanik an einem Maschinenrahmen angebracht wird, wobei durch die Messmechanik ein oder mehrere Wegmesssensor(en) (1, 2) zur Dickenmessung auf das Messobjekt (12, 23) gerichtet werden, wobei durch mindestens einen an einen Wegmesssensor (1, 2) gekoppelten Kompensationssensor (4, 5) der Abstand zu einem Referenzlineal (6, 7) gemessen wird, und wobei durch den gemessenen Abstand zwischen dem Kompensationssensor (4, 5) und dem Referenzlineal (6, 7) eine Veränderung des Messspalts (dA) erfasst und kompensiert wird, **dadurch gekennzeichnet, dass** das Referenzlineal (6, 7) eine Seite einer rahmenförmigen Referenzeinrichtung bildet, wobei die Referenzeinrichtung als Rahmen in die Messmechanik integriert wird, und
dass während der Dickenmessung der Abstand zwischen dem Referenzlineal (6, 7) und der dem Referenzlineal (6, 7) gegenüberliegenden Seite der Referenzeinrichtung konstant gehalten oder gemessen wird.

13. Verfahren nach Anspruch 12, **dadurch gekennzeichnet, dass** die Wegmesssensoren (1, 2) durch die Messmechanik mittels einer Traversiereinheit, insbesondere einer Linearachse, quer zum Messobjekt (12, 23) zur traversierenden Messung bewegt werden.

14. Verfahren nach Anspruch 12 oder 13, **dadurch gekennzeichnet, dass** die Referenzeinrichtung mit einem Kalibrationsteil (3) mit vordefinierter Dicke kalibriert wird, wobei an mehreren Punkten, insbesondere kontinuierlich, der Messspalt ($d_A$) und ein zwischen Kompensationssensor (4, 5) und Referenzlineal (6, 7) gebildeter Kompensationsspalt ($d_{K1}$, $d_{K2}$) gemessen wird.

15. Verfahren nach einem der Ansprüche 12 bis 14, **dadurch gekennzeichnet, dass** nach jeder Traversierung in einer Parkposition der Messspalt ($d_A$) neu erfasst wird.

**Claims**

1. Device for measuring the thickness of a preferably web-like or bulk-product-like measurement object (12, 23) in a measurement gap ($d_A$) with a mechanical measuring system which can be fitted to a machine frame,

   wherein the mechanical measuring system comprises for measuring the thickness one or more displacement measurement sensor(s) (1, 2) which is/are directed towards the measurement object (12, 23),

   wherein at least one compensation sensor (4, 5) is coupled to the displacement measurement sensor or to the displacement measurement sensors in such a manner that, in order to detect and compensate for a change of the measurement gap ($d_A$), the spacing from a reference straight edge (6, 7) can be measured with the compensation sensor (4, 5),

   **characterised in that**

   the reference straight line (6, 7) is constructed as a side of a frame-like reference device which is integrated in the mechanical measuring system, and

   **in that** the frame-like reference device is constructed as a frame in such a manner that during the thickness measurement the spacing between the reference straight line (6, 7) and the side of the reference device opposite the reference straight line (6, 7) is known by means of stabilisation or measurement.

2. Device according to claim 1, **characterised in that** the reference device is constructed in a substantially rectangular manner.

3. Device according to claim 1, **characterised in that** the compensation sensor (4, 5) is constructed as a capacitive sensor or as an eddy current sensor

4. Device according to any one of claims 1 to 3, **characterised in that** the mechanical measuring system is constructed in such a manner that displacement measurement sensors (1, 2) are directed by the mechanical measuring system at both sides towards the measurement object,

   wherein a compensation sensor (4, 5) is coupled to a displacement measurement sensor (1, 2) at both sides of the measurement object (12, 23), and

   wherein the two opposing sides of the reference device are constructed at both sides of the measurement object as a reference straight line (6, 7) for the compensation sensor (4, 5).

5. Device according to claim 4, **characterised in that** the reference device comprises spacers (13, 14) of a temperature-stable material, in particular invar, kovar, zerodur (registered trademarks), etcetera, wherein the spacers (13, 14) connect the reference straight lines (6, 7) in a rigid manner to each other.

6. Device according to claim 4 or 5, **characterised in that** the reference device is supported securely by means of a first spacer (13) and in a floating manner by means of a second spacer (14) on the machine frame or

   **in that** the reference device is secured by means of one of the two reference straight lines (6, 7) to the machine frame, wherein the reference straight line (6, 7) is supported in a secure manner at one side thereof and at the other side thereof in a floating manner.

7. Device according to any one of claims 1 to 6, **characterised in that** the compensation sensor (4, 5) is arranged in such a manner on the displacement measurement sensor (1, 2) that the measurement locations of the compensation sensor (4, 5) and the displacement measurement sensor (1, 2) are located in a measurement axis.

8. Device according to claim 4, **characterised in that** the reference device is secured to the machine frame by means of both reference straight lines (6, 7), wherein the reference straight lines (6, 7) are supported in a secure manner at one side and in a floating manner at the other side, and wherein spacing sensors, in particular measuring probes (21), measure the spacing of the two reference straight lines (6, 7) with respect to each other, wherein a compensation sensor (4, 5) can be arranged at both sides of the displacement measurement sensor (1, 2).

9. Device according to any one of claims 1 to 3, **characterised in that** the mechanical measuring system directs the displacement measurement sensor (1) at one side towards the measurement object (12, 23),

   wherein the measurement object (12, 23) is positioned on a support, in particular a roller (24),

   wherein the support is constructed as a portion of the side of the reference device opposite the reference straight line (6),

   wherein spacing sensors, in particular laser triangulation sensors, cable pull sensors, measurement sensors (21), etcetera, are connected to the reference straight line (6), preferably by means of temperature-stable spacers (13, 14), and wherein the spacer sensors measure the spacing between the reference straight line (6) and the support.

10. Device according to claim 9, **characterised in that** the spacer sensors measure with respect to a reference face (25), wherein the reference face (25) is arranged in such a manner that the spacing between the reference face (25) and the reference straight line (6) is identical to the spacing between the reference straight line (6) and the surface of the support.

11. Device according to claim 9 or 10, **characterised in that** the reference straight line (6) is secured to the machine frame, wherein the reference straight line (6) is supported at one side thereof in a secure manner and at the other side thereof in a floating manner.

12. Method for measuring the thickness of a preferably web-like or bulk-product-like measurement object (12, 23) in a measurement gap (dA), in particular using a device according to any one of claims 1 to 11, wherein a mechanical measuring system is fitted to a machine frame, wherein one or more displacement measurement sensor(s) (1, 2) is/are directed by the mechanical measuring system towards the measurement object (12, 23) in order to measure the thickness, wherein, as a result of at least one compensation sensor (4, 5) which is coupled to a displacement measurement sensor (1, 2), the spacing from a reference straight line (6, 7) is measured, and wherein, as a result of the measured spacing between the compensation sensor (4, 5) and the reference straight line (6, 7), a change of the measurement gap ($d_A$) is detected and compensated for, **characterised in that** the reference straight line (6, 7) forms one side of a frame-like reference device, wherein a reference device is integrated as a frame in the mechanical measuring system, and **in that**, during the thickness measurement, the spacing between the reference straight line (6, 7) and the side of the reference device opposite the reference straight line (6, 7) is kept constant or measured.

13. Method according to claim 12, **characterised in that** the displacement measurement sensors (1, 2) are moved by means of the mechanical measuring system by means of a traversing unit, in particular a linear axis, transversely relative to the measurement object (12, 23) for traversing measurement.

14. Method according to claim 12 or 13, **characterised in that** the reference device is calibrated by means of a calibration component (3) with a predefined thickness, wherein at several locations, in particular continuously, the measurement gap ($d_A$) and a compensation gap ($d_{K1}$, $d_{K2}$) which is formed between the compensation sensor (4, 5) and reference straight line (6, 7) is measured.

15. Method according to any one of claims 12 to 14, **characterised in that** the measurement gap ($D_A$) is newly detected after each traversing in a parking position.

**Revendications**

1. Dispositif de mesure d'épaisseur d'un objet de mesure (12, 23) de préférence en forme de bande ou en morceaux dans un interstice de mesure ($d_A$) avec un mécanisme de mesure pouvant être monté sur un châssis de machine, le mécanisme de mesure pour la mesure d'épaisseur comprenant un ou plusieurs capteurs de déplacement (1, 2) orientés vers l'objet de mesure (12, 23), au moins un capteur de compensation (4, 5) étant couplé au capteur de déplacement ou aux capteurs de déplacement de façon à ce que, pour la mesure et la compensation d'une modification de l'interstice de mesure ($d_A$), la distance par rapport à une règle de référence (6, 7) peut être mesuré avec le capteur de compensation (4, 5), **caractérisé en ce que** la règle de référence (6, 7) est conçue comme un côté d'un dispositif de référence en forme de cadre intégré dans le mécanisme de mesure et le dispositif de référence en forme de cadre est conçu comme un cadre de façon à ce que, pendant la mesure d'épaisseur, la distance entre la règle de référence (6, 7) et le côté du dispositif de référence opposé à la règle de référence (6, 7) est connue par maintien constant ou par mesure.

2. Dispositif selon la revendication 1, **caractérisé en ce que** le dispositif de référence présente une forme globalement rectangulaire.

**3.** Dispositif selon la revendication 1, **caractérisé en ce que** le capteur de compensation (4, 5) est conçu comme un capteur capacitif ou comme un capteur à courant de Foucault.

**4.** Dispositif selon l'une des revendications 1 à 3, **caractérisé en ce que** le mécanisme de mesure est conçu de façon à ce que, grâce au mécanisme de mesure, des capteurs de déplacement (1, 2) sont orientés des deux côtés vers l'objet de mesure,
sur les deux côtés de l'objet de mesure (12, 23), un capteur de compensation (4, 5) étant couplé à un capteur de déplacement (1, 2) et
les deux côtés opposés du dispositif de référence sont conçus sur les deux côtés de l'objet de mesure sous la forme d'une règle de référence (6, 7) pour le capteur de compensation (4, 5).

**5.** Dispositif selon la revendication 4, **caractérisé en ce que** le dispositif de référence comprend des entretoises (13, 14) en matériau stable en température, plus particulièrement en Invar, en Kovar, en Zerodur (marques déposées), etc. les entretoises (13, 14) reliant les règles de référence (6, 7) de manière rigide entre elles.

**6.** Dispositif selon la revendication 4 ou 5, **caractérisé en ce que** le dispositif de référence est logé de manière fixe par l'intermédiaire d'une première entretoise (13) et de manière flottante sur le châssis de machine par l'intermédiaire d'une deuxième entretoise (14) ou
le dispositif de référence est fixé par l'intermédiaire d'une des deux règles de référence (6, 7) au châssis de machine, la règle de référence (6, 7) étant logée de manière fixe sur un de ses côtés et de manière flottante sur son autre côté.

**7.** Dispositif selon l'une des revendications 1 à 6, **caractérisé en ce que** le capteur de compensation (4, 5) est disposé sur le capteur de déplacement (1, 2) de façon à ce que les points de mesure du capteur de compensation (4, 5) et du capteur de déplacement (1, 2) se trouvent dans un axe de mesure.

**8.** Dispositif selon la revendication 4, **caractérisé en ce que** le dispositif de référence est fixé au châssis de machine par l'intermédiaire des deux règles de référence (6, 7), les règles de référence (6, 7) étant logées sur un côté de manière fixe et de l'autre côté de manière flottante et des capteurs de distance, plus particulièrement des palpeurs de mesure (21) mesurant la distance des deux règles de référence (6, 7) entre elles,
un capteur de compensation (4, 5) pouvant être disposé sur les deux côtés du capteur de déplacement (1, 2).

**9.** Dispositif selon l'une des revendications 1 à 3, **caractérisé en ce que** le mécanisme de mesure oriente le capteur de déplacement (1) d'un côté vers l'objet de mesure (12, 23),
l'objet de mesure (12, 23) reposant sur un appui, plus particulièrement un rouleau (24),
l'appui étant conçu comme une partie du côté du dispositif de référence opposée à la règle de référence (6),
des capteurs de distance, plus particulièrement des capteurs de triangulation laser, des capteurs à câbles de traction, des palpeurs de mesure (21) etc. étant reliés avec la règle de référence (6), de préférence par l'intermédiaire d'entretoises stables en température (13, 14) et
les capteurs de distance mesurant la distance entre la règle de référence (6) et l'appui.

**10.** Dispositif selon la revendication 9, **caractérisé en ce que** les capteurs de distance mesurent contre une surface de référence (25), la surface de référence (25) étant disposé de façon à ce que la distance entre la surface de référence (25) et la règle de référence (6) soit identique à la distance entre la règle de référence (6) et la surface de l'appui.

**11.** Dispositif selon la revendication 9 ou 10, **caractérisé en ce que** la règle de référence (6) est fixée au châssis de machine, la règle de référence (6) étant logée de manière fixe sur un de ses côtés et de manière flottante sur son autre côté.

**12.** Procédé de mesure d'épaisseur d'un objet de mesure (12, 23) de préférence en forme de bande ou en morceaux, dans un interstice de mesure (dA), plus particulièrement à l'aide d'un dispositif selon l'une des revendications 1 à 11, un mécanisme de mesure étant monté sur un châssis de machine,
le mécanisme de mesure permettant d'orienter un ou plusieurs capteurs de déplacement (1, 2) pour la mesure d'épaisseur vers l'objet de mesure (12, 23),
au moins un capteur de compensation (4, 5) couplé à un capteur de déplacement (1, 2) permettant de mesurer la distance par rapport à une règle de référence (6, 7),
et la distance mesurée entre le capteur de compensation (4, 5) et la règle de référence (6, 7) permettant de déterminer et de compenser une variation de l'interstice de mesure ($d_A$),

**caractérisé en ce que**
la règle de référence (6, 7) forme un côté d'un dispositif de référence en forme de cadre, le dispositif de référence étant intégré dans le mécanisme de mesure sous la forme d'un cadre et
pendant la mesure d'épaisseur, la distance entre la règle de référence (6, 7) et le côté du dispositif de référence opposé à la règle de référence (6, 7) est maintenue constante ou mesurée.

13. Procédé selon la revendication 12, **caractérisé en ce que** les capteurs de déplacement (1, 2) sont déplacés par le mécanisme de mesure au moyen d'une unité de va-et-vient, plus particulièrement d'un axe linéaire, de manière transversale par rapport à l'objet de mesure (12, 23) pour une mesure traversante.

14. Procédé selon la revendication 12 ou 13, **caractérisé en ce que** le dispositif de référence est calibré avec un élément de calibrage (3) d'une épaisseur prédéfinie, l'interstice de mesure ($d_A$) et un interstice de compensation ($d_{k1}$, $d_{k2}$) formé entre le capteur de compensation (4, 5) et la règle de référence (6, 7) sont mesurés au niveau de plusieurs points, plus particulièrement de manière continue.

15. Procédé selon l'une des revendications 12 à 14, **caractérisé en ce que**, après chaque traversée dans une position de stationnement, l'interstice de mesure ($d_A$) est déterminée à nouveau.

$d_{M2}$

$d_{M1}$

3

1

$d_A$

$d_K$

2

Fig. 1

Stand der Technik

Fig. 2

Fig. 3

EP 2 697 600 B1

Fig. 4

EP 2 697 600 B1

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4220501 A1
- DE 4407215 A1